(19) Europäisches Patentamt
European Patent Office
Office européen des brevets

(11) **EP 3 840 205 B1**

(12) **FASCICULE DE BREVET EUROPEEN**

(45) Date de publication et mention
de la délivrance du brevet:
**04.01.2023 Bulletin 2023/01**

(21) Numéro de dépôt: **20213290.8**

(22) Date de dépôt: **11.12.2020**

(51) Classification Internationale des Brevets (IPC):
***H02M 5/297*** *(2006.01)*

(52) Classification Coopérative des Brevets (CPC):
**H02M 5/297;** H02M 5/293

(54) **CONVERTISSEUR AC-AC COMPORTANT UNE MATRICE D'INTERRUPTEURS BIDIRECTIONNELS A CONFIGURATION PROGRAMMABLE**

WECHSELSTROM-WECHSELSTROM-WANDLER, DER EINE MATRIX AUS BIDIREKTIONALEN SCHALTERN MIT PROGRAMMIERBARER KONFIGURATION UMFASST

AC-AC CONVERTER COMPRISING AN ARRAY OF BIDIRECTIONAL SWITCHES WITH PROGRAMMABLE CONFIGURATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2019 FR 1914591**

(43) Date de publication de la demande:
**23.06.2021 Bulletin 2021/25**

(73) Titulaire: **THALES**
**92400 Courbevoie (FR)**

(72) Inventeur: **ABDESSELAM, Francis**
**78400 CHATOU (FR)**

(74) Mandataire: **Atout PI Laplace**
**Immeuble "Visium"**
**22, avenue Aristide Briand**
**94117 Arcueil Cedex (FR)**

(56) Documents cités:
- S. YUSOFF ET AL: "Predictive control of a direct AC/AC matrix converter for power supply applications", 6TH IET INTERNATIONAL CONFERENCE ON POWER ELECTRONICS, MACHINES AND DRIVES (PEMD 2012), 1 janvier 2012 (2012-01-01), pages A92-A92, XP055720517, DOI: 10.1049/cp.2012.0228 ISBN: 978-1-84919-616-1
- JOSE RODRIGUEZ ET AL: "A Review of Control and Modulation Methods for Matrix Converters", IEEE TRANSACTIONS ON INDUSTRIAL ELECTRONICS., vol. 59, no. 1, 1 janvier 2012 (2012-01-01), pages 58-70, XP055719958, USA ISSN: 0278-0046, DOI: 10.1109/TIE.2011.2165310
- GULBUDAK OZAN ET AL: "Finite state model predictive control for 3x3 matrix converter based on switching state elimination", 2014 IEEE ENERGY CONVERSION CONGRESS AND EXPOSITION (ECCE), IEEE, 14 septembre 2014 (2014-09-14), pages 5805-5812, XP032680907, DOI: 10.1109/ECCE.2014.6954198
- RIVERA M ET AL: "A review of predictive control techniques for matrix converter applications", IECON 2017 - 43RD ANNUAL CONFERENCE OF THE IEEE INDUSTRIAL ELECTRONICS SOCIETY, IEEE, 29 octobre 2017 (2017-10-29), pages 7360-7365, XP033277198, DOI: 10.1109/IECON.2017.8217289

**Description**

L'invention se situe dans le domaine des convertisseurs AC-AC. Dans ce qui suit, les terminologies AC signifient « Alternating Current » et DC « Direct Current ». Un convertisseur AC-AC transforme une tension d'entrée multiphasée définie par sa fréquence et sa tension efficace en une tension de sortie multiphasée ayant une fréquence et une tension efficace différentes.

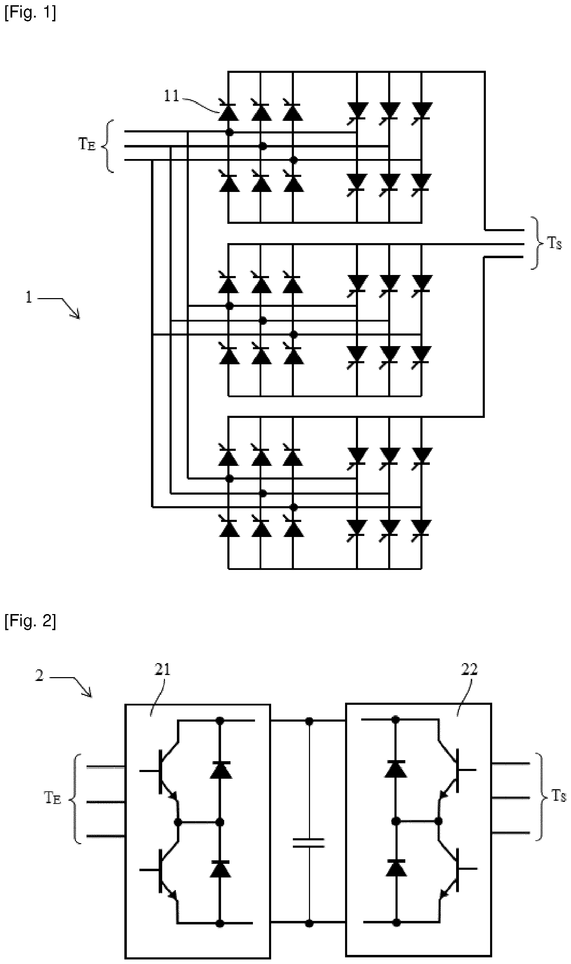

Il existe différentes méthodes permettant de réaliser un tel convertisseur. A titre de premier exemple de réalisation, la figure 1 représente un cycloconvertisseur 1 permettant de convertir une tension d'entrée triphasée $T_E$ en une tension de sortie triphasé $T_S$. Ce convertisseur comporte trois étages comprenant chacun douze thyristors 11. Ceux-ci se bloquent lors du passage à zéro du courant qui les traverse.

A titre de second exemple de réalisation, la figure 2 représente un convertisseur 2 dit « back-to-back » permettant de convertir une tension d'entrée triphasée $T_E$ en une tension de sortie triphasé $T_S$. Il comporte un premier étage 21 de conversion AC-DC puis un second étage 22 de conversion DC-AC.

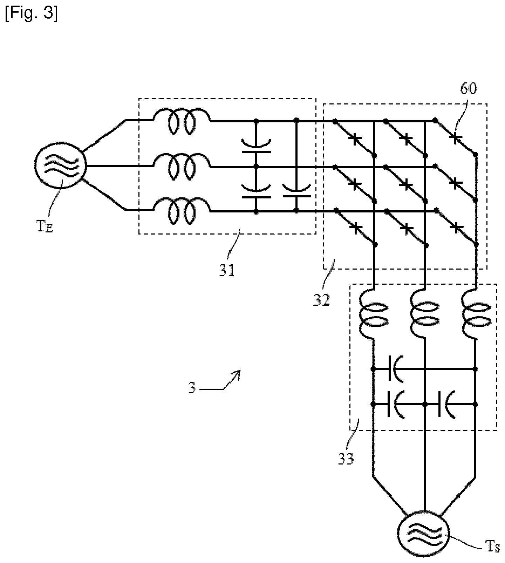

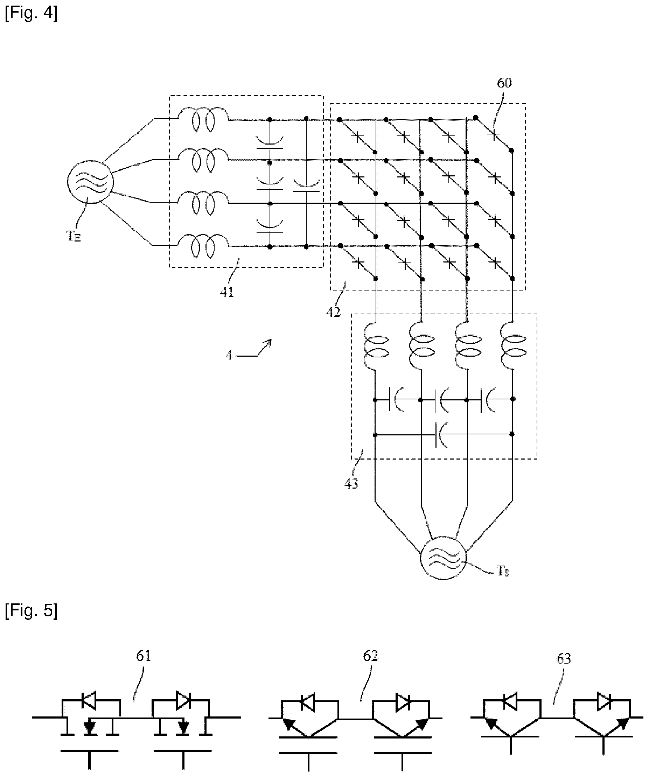

A titre de troisième exemple de réalisation, les figures 3 et 4 représentent deux convertisseurs matriciels. Dans l'exemple de la figure 3, le convertisseur matriciel 3 transforme une tension d'entrée triphasée en une tension de sortie triphasée. Dans l'exemple de la figure 4, le convertisseur matriciel 4 transforme une tension d'entrée quadriphasée en une tension de sortie quadriphasée.

Un convertisseur matriciel comporte essentiellement :

- un premier ensemble de filtrage de la tension d'entrée, ensemble référencé 31 et 41 sur les figures 3 et 4 ;
- une matrice d'interrupteurs 60, matrice référencée 32 et 42 sur les figures 3 et 4 ;
- un second ensemble de filtrage de la tension de sortie, ensemble référencé 33 et 43 sur les figures 3 et 4.

La publication US 2002/0079706 intitulée "Variable speed wind turbine having a matrix converter" donne un exemple d'utilisation de ce type de convertisseur AC-AC dans lequel le convertisseur permet de maintenir une fréquence du signal de sortie triphasé constante.

Si la tension d'entrée comprend N phases et la tension de sortie M phases, la matrice d'interrupteurs comporte NxM interrupteurs. Ainsi, la matrice de la figure 3 comporte 9 interrupteurs et la matrice de la figure 4 comporte 16 interrupteurs.

A titre d'exemples représentés sur la figure 5, les interrupteurs peuvent être constitués de transistors MOS silicium, MOS signifiant « Metal Oxide Semiconductor » ou MOS SiC en carbure de silicium. Ils portent la référence 61 sur la figure 5. Les interrupteurs peuvent être à transistors bipolaires à grille isolée ou « IGBT », acronyme signifiant « Insulated Gate Bipolar Transistor ». Ils portent la référence 62 sur la figure 5. Les interrupteurs peuvent être également à transistors bipolaires silicium ou bipolaires SiC. Ils portent la référence 63 sur la figure 5.

Le convertisseur matriciel comporte de nombreux avantages sur d'autres solutions techniques. Le convertisseur possède un rendement élevé en ne nécessitant qu'un seul étage de puissance et provoque une perte de tension faible. Par ailleurs, le convertisseur matriciel peut être facilement bidirectionnel. Ainsi, il peut transformer la tension d'entrée d'une source en tension de sortie d'une charge ou l'inverse.

Cependant, les convertisseurs matriciels selon l'art antérieur comportent certains inconvénients. Leur commande doit être réalisée par des composants numériques complexes. Les procédés de contrôles sont, par exemple, de type « MDCM », signifiant « Modulation Duty-Cycle Matrix » ou « SVM », signifiant « Space Vector Modulation » ou mixtes de type « DCSV », signifiant « Duty-Cycle Space Vector ».

Par ailleurs, les commandes des convertisseurs nécessitent :

- de mesurer la fréquence réseau ;
- de mesurer le passage à zéro de la tension réseau ou de mesurer le passage à zéro du courant d'entrée afin de connaître le déphasage entre chaque tension réseau et sa consigne de régulation.

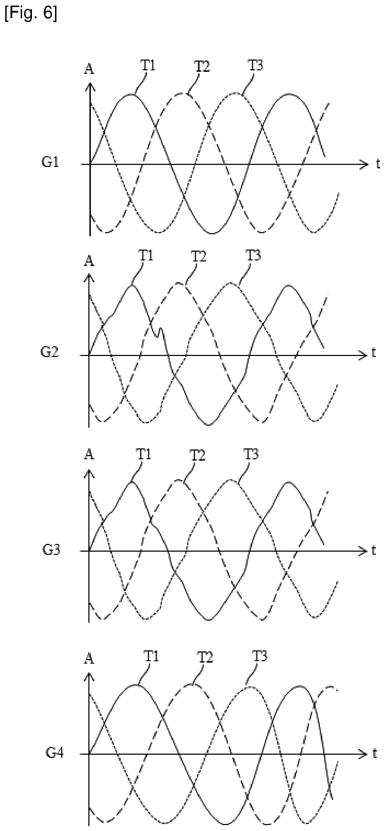

Ces méthodes de mesure rendent ce type de convertisseur AC-AC sensible à différentes perturbations illustrées sur les quatre graphiques de la figure 6. Ces quatre graphiques représentent en fonction du temps les variations des trois tensions T1, T2 et T3 d'un signal triphasé. Le premier graphique G1 représente les tensions en l'absence de perturbations. Les trois tensions sont parfaitement sinusoïdales. Le second graphique G2 représente ces mêmes tensions en présence de variations rapides de tension. Le troisième graphique G3 représente les tensions en présence de distorsions et d'harmoniques naturellement présentes sur des distributions AC. Ces perturbations, absentes dans les réseaux de distribution destinés à alimenter les réseaux domestiques ou industriels, sont, notamment, présentes sur les réseaux de distributions de tension AC des aéronefs, destinés alimenter les convertisseurs AC-AC des aéronefs, dans lesquels les génératrices délivrant les tensions AC sont de faible puissance (inférieure à 150kW). Enfin, le quatrième graphique représente les tensions en présence de variations rapides de la fréquence réseau.

Pour diminuer la sensibilité d'un convertisseur matriciel à ces différentes perturbations, la mesure de la fréquence réseau et l'évaluation du déphasage entre chaque tension réseau et sa consigne de régulation sont réalisées par une mesure des tensions réseau, un filtrage haute fréquence de ces mesures, une évaluation de la fréquence réseau et un verrouillage de cette fréquence par une boucle à verrouillage de phase, connue sous l'acronyme « PLL » signifiant « Phase-Locked Loop ». La publication de Xing Li et al intitulée « Modulation stratégies based on mathematical construction method for matrix converter under unbalanced input voltages », parue dans IET Power Electronics (Volume : 6, Issue : 3, March 2013) donne un exemple d'un convertisseur matriciel comportant une telle boucle de phase.

D'autres documents de l'art antérieur pertinents pour l'invention sont les documents suivants:

S. YUSOFF ET AL: "Prédictive control of a direct AC/AC matrix converter for power supply applications", 6TH IET INTERNATIONAL CONFERENCE ON POWER ELECTRONICS, MACHINES AND DRIVES (PEMD 2012), 1 janvier 2012 (2012-01-01), pages A92-A92
et
JOSE RODRIGUEZ ET AL: "A Review of Control and Modulation Methods for Matrix Converters", IEEE TRANSACTIONS ON INDUSTRIAL ELECTRONICS, vol. 59, no. 1, 1 janvier 2012 (2012-01-01), pages 58-70.
S. YUSOFF ET AL divulgue dans la Fig.2 un convertisseur AC-AC matriciel qui évalue pour les états valides des interrupteurs une fonction coût, dans le but de diminuer entre autre l'erreur de la tension de sortie estimée par rapport à sa tension de référence.
JOSE RODRIGUEZ ET AL divulgue un ensemble exhaustif de méthodes de contrôle pour convertisseur AC-AC matriciel.

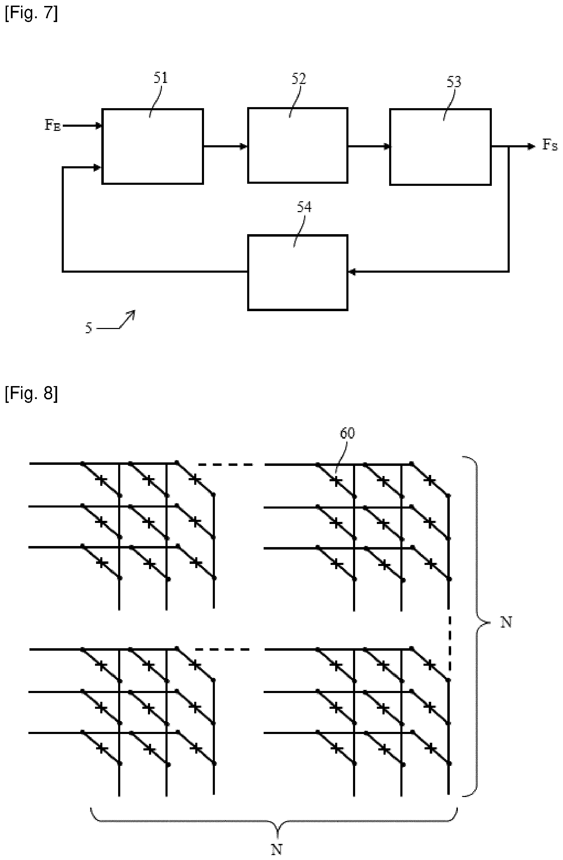

A titre d'exemple, la figure 7 de la présente demande représente le synoptique d'une boucle 5 PLL qui transforme un signal à une certaine fréquence d'entrée $F_E$ en un signal à une fréquence de sortie $F_S$. Cette boucle comporte :

- un comparateur de phase 51 ;
- un filtre 52 ;
- un oscillateur 53 commandé en tension ou « VCO », signifiant « Voltage Control Oscillator » ;
- un diviseur par N si la fonction PLL est numérique.

Le convertisseur AC-AC selon l'invention ne présente pas les inconvénients précédents. Il est basé sur le principe suivant : A chaque instant, il existe une configuration d'interrupteurs qui minimise l'erreur entre les tensions d'entrée présentes et les tensions de sortie souhaitées.

Ce principe est représenté en figure 8. Soit un convertisseur Nphasé dont la tension d'entrée a N composantes et la tension de sortie N composantes. La matrice d'interrupteurs comporte donc $N^2$ interrupteurs 60. Chaque interrupteur peut être ouvert ou fermé. Il existe donc $C_{N^2}^{N}$ configurations possibles, soit encore $\frac{N^2!}{(N^2-N)!.N!}$ configurations. Le symbole « ! » est classiquement le symbole de la factorielle. Par exemple, dans le cas d'une tenson triphasée, N valant 3, il existe 84 configurations d'interrupteurs possibles.

Il faut cependant exclure toutes les configurations qui court-circuitent les phases d'entrée et toutes les configurations qui court-circuitent les phases de sortie. Autrement dit, il ne doit y avoir qu'un seul interrupteur fermé sur chaque ligne et chaque colonne de la matrice. Au final, il reste N ! configurations d'interrupteurs admissibles. Dans le cas d'une tension triphasée, il existe donc 6 configurations admissibles et dans le cas d'une tension quadriphasée, 24 configurations sont admissibles.

Pour chaque configuration d'interrupteurs, on réalise N sommes de différences de tensions. Chaque différence de tension correspond à la différence absolue entre une des tensions d'entrée et une des tensions de référence. Si on note $E_i$ une des tensions d'entrée et $Vref_j$ une des tensions de référence, une configuration d'interrupteurs $C_k$ vaut :

$$C_{k=} \sum_{i,j}^{N} |E_i - Vref_j|$$ i et j variant de 1 à N, i et j n'apparaissant qu'une seule fois dans la somme.

La configuration d'interrupteurs la plus efficace correspond à la somme de différences de tension minimale.

Un objet de l'invention est donc un convertisseur AC-AC matriciel transformant une tension périodique d'entrée multiphasée comportant N tensions d'entrée déphasées en une tension périodique de sortie multiphasée comportant N tensions de sortie, ledit convertisseur comportant une matrice carrée comportant $N^2$ interrupteurs, caractérisé en ce que le convertisseur comporte une électronique de contrôle et de commande réalisant périodiquement au moins les deux fonctions suivantes :

- mémorisation de N! sommes de tensions, chaque somme de tensions correspondant à une configuration d'interrupteurs, chaque configuration d'interrupteurs mettant en relation N fois une et une seule tension d'entrée et une et une seule tension de référence, une tension de référence correspondant à une tension de sortie attendue, chaque somme de tensions étant la somme des N différences en valeur absolue entre une et une seule tension d'entrée et une et une seule tension de référence ;

- commutation de la matrice d'interrupteurs pour appliquer la configuration d'interrupteurs correspondant à la somme de tensions la plus faible.

L'invention s'appuie sur les mesures de tension d'entrée des différentes phases pour déterminer une configuration d'interrupteurs correspondant à la somme de tensions la plus faible et commander la matrice d'interrupteurs en fonction de cette configuration. Ainsi, l'invention prend en compte des distorsions des différentes phases pour commander les interrupteurs. L'invention ne fait pas d'a priori sur la forme (sinusoïdale) des phases de la tension d'entrée. Elle permet donc d'obtenir une certaine robustesse aux distorsions des tensions d'entrée et donc de réaliser une régulation performante.

Avantageusement, le convertisseur comporte un échantillonneur-bloqueur mémorisant périodiquement les valeurs des N! sommes de tension à la fréquence d'échantillonnage, ladite fréquence d'échantillonnage étant d'un ordre de grandeur supérieure à la fréquence de la tension périodique d'entrée et d'un ordre de grandeur supérieure à la fréquence de la tension périodique de sortie.

Avantageusement, le convertisseur comprend des moyens de détermination déterminant périodiquement, à la fréquence d'échantillonnnage, la somme de tensions la plus faible parmi les N ! sommes de tensions.

Avantageusement, le convertisseur comporte un premier ensemble de filtrage de la tension d'entrée multiphasée, la matrice d'interrupteurs, un second ensemble de filtrage de la tension de sortie multiphasée, une boucle de régulation électronique et l'électronique de commande et de contrôle, l'électronique de commande et de contrôle pilotant, c'est-à-dire commandant, la boucle de régulation électronique et la boucle de régulation électronique pilotant, c'est-à-dire commandant, les commutations de la matrice d'interrupteurs.

Avantageusement, la boucle de régulation électronique commande les commutations de la matrice d'interrupteurs en commandant l'ouverture et la fermeture de chaque interrupteur, défini comme étant fermé dans ladite configuration d'interrupteurs correspondant à la somme de tensions la plus faible, à une fréquence de découpage et avec un rapport cyclique définis par la boucle de régulation à partir des mesures des courants de phase de sortie, et en maintenant ouvert chaque interrupteur défini comme étant ouvert dans ladite configuration d'interrupteurs correspondant à la somme de tensions la plus faible.

Avantageusement, le nombre N valant 3, les tensions d'entrée et de sortie sont triphasées, la matrice d'interrupteurs comportant 9 interrupteurs, le nombre de configurations d'interrupteurs étant égal à 6.

Avantageusement, le nombre N valant 4, les tensions d'entrée et de sortie sont quadriphasées, la matrice d'interrupteurs comportant 16 interrupteurs, le nombre de configurations d'interrupteurs étant égal à 24.

Avantageusement, les fréquences de la tension périodique d'entrée et de la tension périodique de sortie sont comprises entre 0,1Hz et 1000 Hz.

Avantageusement, les puissances transmises par ledit convertisseur sont comprises entre 1 kW et 1000 kW.

Avantageusement, le convertisseur est bidirectionnel, c'est-à-dire que la tension périodique d'entrée multiphasée est issue d'une source de tension et que la tension périodique de sortie multiphasée alimente une charge ou l'inverse.

D'autres caractéristiques, détails et avantages de l'invention ressortiront à la lecture de la description faite en référence aux dessins annexés donnés à titre d'exemple et qui représentent, respectivement :

[Fig.1] une illustration d'un premier convertisseur AC-AC selon l'art antérieur ;

[Fig.2] une illustration d'un second convertisseur AC-AC selon l'art antérieur ;

[Fig.3] une illustration d'un convertisseur matriciel AC-AC triphasé ;

[Fig.4] une illustration d'un convertisseur matriciel AC-AC quadriphasé ;

[Fig.5] représente différents types d'interrupteurs d'un convertisseur matriciel ;

[Fig.6] représente les différentes perturbations d'un signal triphasé ;

[Fig.7] représente une boucle de phase PLL utilisé dans un convertisseur matriciel selon l'art antérieur ;

[Fig.8] représente le synoptique d'une matrice d'interrupteurs d'un convertisseur selon l'invention ;

[Fig.9] représente le synoptique d'un convertisseur matriciel selon l'invention dans le cas de tensions d'entrée et de sortie triphasées ;

[Fig.10] représente le synoptique de l'électronique de commande d'un convertisseur matriciel selon l'invention ;

[Fig.11] représente les six configurations d'interrupteurs dans le cas de signaux triphasés ;

[Fig.12] représente le synoptique de l'électronique de commande d'un convertisseur matriciel selon l'invention dans le cas d'un fonctionnement source vers charge ;

[Fig.13] représente le synoptique de l'électronique de commande d'un convertisseur matriciel selon l'invention dans le cas d'un fonctionnement charge vers source.

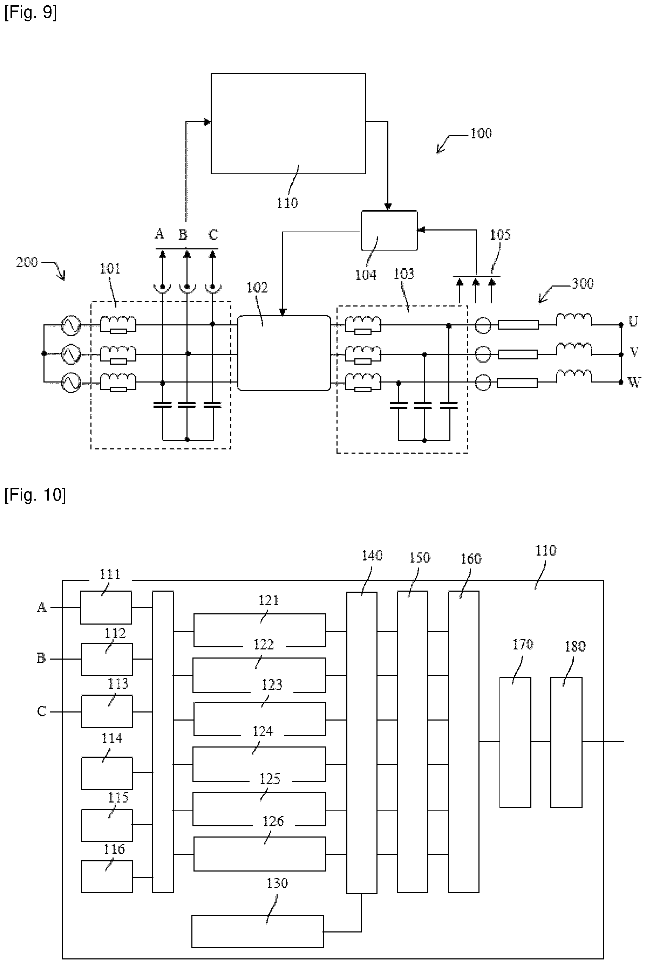

Le convertisseur matriciel AC-AC selon l'invention peut s'appliquer à tous types de tensions multiphasées. Cependant, comme on l'a vu, le nombre de configurations possibles d'interrupteurs croît comme la factorielle du nombre de phases. Aussi, dans ce qui suit, par souci de clarté, les figures 9 à 13 se rapportent à des tensions triphasées, limitant ainsi le nombre de configurations d'interrupteurs à 6. Pour l'homme du métier, la généralisation à des tensions comportant plus de trois phases ne présente aucune difficulté technique, le nombre de configurations à prendre en compte étant simplement plus important, le synoptique du convertisseur restant globalement le même.

La figure 9 représente le synoptique d'un convertisseur matriciel 100 selon l'invention dans le cas de tensions d'entrée 200 et de sortie 300 triphasées. Dans ce qui suit, on notera A, B et C les trois tensions de phase de la tension d'entrée et U, V et W les trois tensions de phase de la tension de sortie. On notera également Va, Vb et Vc les valeurs des trois tensions de référence à un instant t correspondant à un temps d'échantillonnage et Vu, Vv et Vw les valeurs des trois tensions de sortie au même instant t d'échantillonnage.

Ce convertisseur matriciel 100 comporte les éléments suivants :

- un premier ensemble de filtrage 101 ;
- une matrice d'interrupteurs 102 ;
- un second ensemble de filtrage 103 ;
- une électronique de commande et de contrôle 110 ;
- une boucle de régulation électronique 104 ;
- une électronique de mesure des courants 105.

Le premier ensemble de filtrage 101 est disposé entre la source de tension 200 et la matrice d'interrupteurs 102. Le second ensemble de filtrage 103 est disposé entre la matrice d'interrupteurs 102 et la charge 300. Chaque ensemble de filtrage comporte trois dispositifs de filtrage identiques disposés sur les trois voies d'entrée et sur les trois voies de sortie du convertisseur matriciel. La matrice d'interrupteurs 102 comporte trois rangées de trois interrupteurs non représentés sur la figure 9.

L'électronique de commande et de contrôle 110 pilote, c'est-à-dire commande, la boucle de régulation électronique 104 ou modulation de largeur d'impulsions (MLI); « PWM », acronyme signifiant « Pulse Width Modulation » qui commande les ouvertures et les fermetures des interrupteurs de la matrice 102 à la fréquence du PWM appelée fréquence de découpage.

L'électronique du PWM est également pilotée, c'est-à-dire commandée, en intensité par les mesures de courant de l'électronique 105, c'est-à-dire des courants de phase mesurés, par l'électronique 105, en sortie de la matrice 102. Autrement dit, la boucle de régulation 104 commande les ouvertures et fermetures des interrupteurs de la matrice 102 à la fréquence du PWM à partir de mesures des courants de phase mesurés en sortie de la matrice 102.

La durée d'application du PWM est proportionnelle au courant souhaité.

Autrement dit, le rapport cyclique du PWM ou de la MLI est proportionnel au courant souhaité.

La fonction de la boucle de régulation est de commander les interrupteurs de la matrice d'interrupteurs 102 de façon à réguler la tension efficace de sortie ou le courant efficace de sortie sur une tension efficace de commande ou, respectivement, sur un courant efficace de commande. L'électronique de commande et de contrôle 110 comporte les éléments suivants :

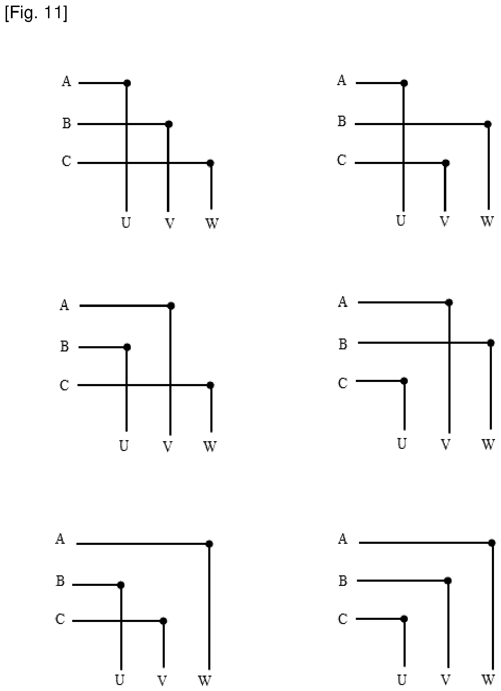

- trois moyens de mesure 111, 112 et 113 des trois tensions d'entrée Va, Vb et Vc prises à un instant t correspondant à un temps d'échantillonnage ;
- trois moyens de calcul 114, 115 et 116 des trois consignes Vu, Vv et Vw correspondant aux valeurs attendues des trois tensions de sortie au même instant t d'échantillonnage ;
  six moyens de calcul 121 à 126 des sommes de tensions, chaque somme de tensions correspondant à une configuration d'interrupteurs. Ces différentes configurations sont représentées sur la figure 11. Elles sont notées de C1 à C6. Plus précisément, on a, à chaque instant d'échantillonnage :

$$\text{Configuration C1} \quad |Va - Vu| + |Vb - Vv| + |Vc - Vw|$$

$$\text{Configuration C2} \quad |Va - Vu| + |Vb - Vw| + |Vc - Vv|$$

$$\text{Configuration C3} \quad |Va - Vv| + |Vb - Vu| + |Vc - Vw|$$

$$\text{Configuration C4} \quad |Va - Vv| + |Vb - Vw| + |Vc - Vu|$$

$$\text{Configuration C5} \quad |Va - Vw| + |Vb - Vu| + |Vc - Vv|$$

$$\text{Configuration C6} \quad |Va - Vw| + |Vb - Vv| + |Vc - Vu|$$

- l'échantillonneur-bloqueur 140 connu également sous le terme anglais « Sample and Hold » dont la fonction est de maintenir périodiquement constantes, c'est-à-dire de mémoriser périodiquement, à la fréquence d'échantillonnage, les valeurs des sommes des tensions. Les valeurs des sommes des tensions, c'est-à-dire des configurations, correspondent aux résultats des derniers calculs effectués par les moyens de calcul 121 à 126 et reçus par l'échantillonneur bloqueur.
- les moyens de contrôle 130 qui fonctionnent à la fréquence d'horloge de l'échantillonnage et qui pilotent, c'est-à-dire commandent, les différents moyens de l'électronique de commande à chaque changement d'instant d'échantillonnage t, la fréquence d'échantillonnage étant d'un ordre de grandeur supérieure à la fréquence de la tension périodique d'entrée et d'un ordre de grandeur supérieure à la fréquence de la tension périodique de sortie ;
- des moyens de comparaison 150 qui assurent la comparaison des valeurs des six sommes de tension calculées les moyens de calcul 121 à 126 ;
- des moyens de détermination 160 de la somme de tensions la plus faible,;
- des éventuels moyens de commande 170 de commutation des interrupteurs pour appliquer la configuration correspondant à la somme de tensions la plus faible ; une éventuelle interface 180 de contrôle de puissance mettant en œuvre les commandes précédentes.

Les moyens de contrôle 130 commandent les moyens 150, 160 pour que les moyens de comparaison 150 réalisent périodiquement, à la fréquence d'échantillonnnage, la comparaison des valeurs des sommes de tension, et de sorte que les moyens de détermination 160 déterminent périodiquement, à la fréquence d'échantillonnange, la somme de tensions la plus faible correspondant à la configuration d'interrupteurs optimale.

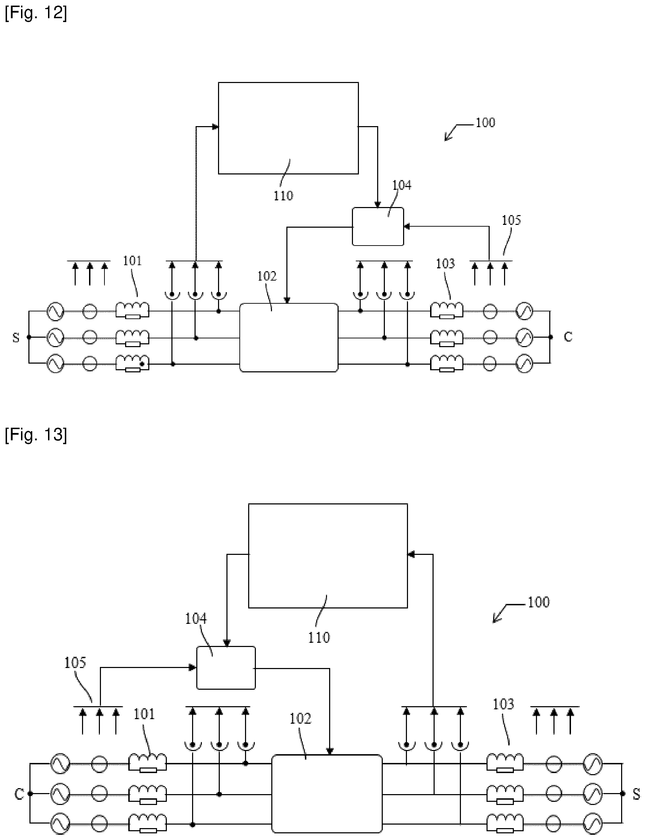

Dans les réalisations des figures 10 et 12, l'électronique de contrôle et de commande 110 est dépourvue des moyens de commande 170 et 180.

La boucle de régulation 104 reçoit la tension la plus faible déterminée par les moyens de détermination.

Pour une configuration d'interrupteurs correspondant à la somme de tensions la plus faible, chaque interrupteur de la matrice 102 est défini comme étant, soit fermé, soit ouvert. La boucle de régulation 104 est configurée pour commander les commutations de la matrice d'interrupteurs 102 en commandant l'ouverture et la fermeture de chaque interrupteur de la matrice 102 défini comme étant fermé dans ladite configuration d'interrupteurs correspondant à la somme de tensions la plus faible, à une fréquence de découpage et avec un rapport cyclique définis par la boucle de régulation à partir des mesures des courants de phase de sortie, et en maintenant ouvert chaque interrupteur défini comme étant ouvert dans ladite configuration d'interrupteurs correspondant à la somme de tensions la plus faible.A chaque changement d'instant d'échantillonnage, les mesures de tension, les calculs et la sélection de la configuration la mieux adaptée sont réitérées, la configuration la mieux adaptée pouvant être identique à celle sélectionnée à l'instant précédent ou une autre.

Les fréquences de la tension périodique d'entrée et de la tension périodique de sortie sont préférentiellement comprises entre 50 Hz et 1000 Hz, sachant que le convertisseur selon l'invention peut travailler à des fréquences plus faibles ou plus élevées.

Les puissances transmises par ledit convertisseur sont comprises entre 1 kW et 1000 kW, cette fourchette de valeurs n'étant pas limitative.

Compte-tenu des valeurs de fréquence et de puissance de fonctionnement, les composants électroniques à mettre en œuvre ne présentent pas de difficultés particulières.

Le convertisseur selon l'invention peut être bidirectionnel, c'est-à-dire que la tension périodique d'entrée multiphasée est issue d'une source de tension et que la tension périodique de sortie multiphasée alimente une charge ou l'inverse.

Les figures 12 et 13 illustrent cette réversibilité. Sur la figure 12, le convertisseur est disposé entre une source d'entrée S et une charge de sortie C. Sur la figure 13, le convertisseur est disposé entre une charge d'entrée C et une source de sortie S.

Dans ces deux configurations, la structure du convertisseur est identique. Il comporte comme précédemment décrit, un premier ensemble de filtrage 101, une matrice d'interrupteurs 102, un second ensemble de filtrage 103, une électronique de commande et de contrôle 110, une boucle de régulation électronique 104 et une électronique de mesure des courants 105.

Dans l'exemple détaillé ci-dessus, les tensions sont triphasées. Lorsque les tensions sont quadriphasées, le synoptique du convertisseur comporte les mêmes éléments que celui de la figure 9. Simplement, le nombre de configurations d'interrupteurs à comparer est plus important. Il passe à 24 configurations. Le nombre de configurations passerait à 120 dans le cas de tensions comportant cinq phases et ainsi de suite.

Dans une variante, le convertisseur selon l'invention est dépourvu de boucle de régulation électronique 104 et éventuellement de l'électronique 105 de mesure des courants. Les interrupteurs sont alors commandés à partir des valeurs de tension mais pas à partir de mesures de courants en sortie de la matrice. L'électronique de contrôle et de commande 110 comprennent les éléments 170 et 180 qui sont configurés de sorte à appliquer la configuration d'interrupteurs correspondant à la somme de tensions la plus faible déterminée par les moyens 160.

## Revendications

1. Convertisseur AC-AC matriciel (100) transformant une tension périodique d'entrée multiphasée (200) comportant N tensions d'entrée en une tension périodique de sortie (300) multiphasée comportant N tensions de sortie, ledit convertisseur comportant une matrice (102) carrée comportant $N^2$ interrupteurs, **caractérisé en ce que** le convertisseur comporte une électronique (110) de contrôle et de commande réalisant périodiquement au moins les deux fonctions suivantes :

   - mémorisation de N! sommes de tensions, chaque somme de tensions correspondant à une configuration d'interrupteurs, chaque configuration d'interrupteurs mettant en relation N fois une et une seule tension d'entrée et une et une seule tension de référence, une tension de référence correspondant à une tension de sortie attendue, chaque somme de tensions étant la somme des N différences en valeur absolue entre une et une seule tension d'entrée et une et une seule tension de référence
   - commutation de la matrice d'interrupteurs pour appliquer la configuration d'interrupteurs correspondant à la somme de tensions la plus faible.

2. Convertisseur AC-AC matriciel selon la revendication 1, **caractérisé en ce que** le convertisseur comporte un échantillonneur-bloqueur (140) mémorisant périodiquement, à la fréquence d'échantillonnage,les N! sommes de tensions , ladite fréquence d'échantillonnage étant d'un ordre de grandeur supérieure à la fréquence de la tension périodique d'entrée et d'un ordre de grandeur supérieure à la fréquence de la tension périodique de sortie.

3. Convertisseur AC-AC matriciel selon la revendication précédente, comprenant des moyens de détermination déterminant périodiquement, à la fréquence d'échantillonnage, la somme de tensions la plus faible parmi les N ! sommes de tensions.

4. Convertisseur AC-AC matriciel selon l'une quelconque des revendications 2 et 3, **caractérisé en ce que** le convertisseur comporte un premier ensemble (101) de filtrage de la tension d'entrée multiphasée, la matrice (102) d'interrupteurs, un second ensemble (103) de filtrage de la tension de sortie multiphasée, une boucle de régulation électronique (104) et l'électronique de commande et de contrôle (110), l'électronique de commande et de contrôle pilotant la boucle de régulation électronique et la boucle de régulation électronique pilotant les commutations de la matrice d'interrupteurs.

5. Convertisseur AC-AC matriciel selon la revendication 4, dans lequel la boucle de régulation électronique est configurée pour commander les commutations de la matrice d'interrupteurs en commandant l'ouverture et la fermeture de chaque interrupteur défini comme étant fermé dans ladite configuration d'interrupteurs correspondant à la somme de tensions la plus faible, à une fréquence de découpage et avec un rapport cyclique définis par la boucle de régulation à partir des mesures des courants de phase de sortie, et en maintenant ouvert chaque interrupteur défini comme étant ouvert dans ladite configuration d'interrupteurs correspondant à la somme de tensions la plus faible.

6. Convertisseur AC-AC matriciel selon l'une des revendications précédentes, **caractérisé en ce que** le nombre N valant 3, les tensions d'entrée et de sortie sont triphasées, la matrice d'interrupteurs comportant 9 interrupteurs, le nombre de configurations d'interrupteurs étant égal à 6.

7. Convertisseur AC-AC matriciel selon l'une des revendications 1 à 5, **caractérisé en ce que** le nombre N valant 4, les tensions d'entrée et de sortie sont quadriphasées, la matrice d'interrupteurs comportant 16 interrupteurs, le nombre de configurations d'interrupteurs étant égal à 24.

8. Convertisseur AC-AC matriciel selon l'une des revendications précédentes, **caractérisé en ce que** les fréquences de la tension périodique d'entrée et de la tension périodique de sortie sont comprises entre 0,1 Hz et 1000 Hz.

9. Convertisseur AC-AC matriciel selon l'une des revendications précédentes, **caractérisé en ce que** les puissances transmises par ledit convertisseur sont comprises entre 1 kW et 1000 kW.

10. Convertisseur AC-AC matriciel selon l'une des revendications précédentes, **caractérisé en ce que** le convertisseur est bidirectionnel, c'est-à-dire que la tension périodique d'entrée multiphasée est issue d'une source de tension et que la tension périodique de sortie multiphasée alimente une charge ou l'inverse.

**Patentansprüche**

1. AC-AC-Matrixwandler (100), der eine mehrphasige periodische Eingangsspannung (200) mit N Eingangsspannungen in eine mehrphasige periodische Ausgangsspannung (300) mit N Ausgangsspannungen umwandelt, wobei der Wandler eine quadratische Matrix (102) mit $N^2$ Schaltern aufweist, **dadurch gekennzeichnet, dass** der Wandler eine Befehls- und Steuerelektronik (110) aufweist, die periodisch mindestens die beiden folgenden Funktionen durchführt:

   - Speichern von N! Spannungssummen, wobei jede Spannungssumme einer Schalterkonfiguration entspricht, wobei jede Schalterkonfiguration N mal nur eine einzige Eingangsspannung und nur eine einzige Referenzspannung in Beziehung setzt, wobei eine Referenzspannung einer erwarteten Ausgangsspannung entspricht, wobei jede Spannungssumme die Summe der N Absolutwertdifferenzen zwischen nur einer einzigen Eingangsspannung und nur einer einzigen Referenzspannung ist,
   - Umschalten der Schaltermatrix zum Anwenden der Schalterkonfiguration, die der niedrigsten Spannungssumme entspricht.

2. AC-AC-Matrixwandler nach Anspruch 1, **dadurch gekennzeichnet, dass** der Wandler eine Abtast/Halteschaltung (140) aufweist, die periodisch, mit der Abtastfrequenz, die N! Spannungssummen speichert, wobei die Abtastfrequenz um eine Größenordnung höher ist als die Frequenz der periodischen Eingangsspannung und um eine Größenordnung größer ist als die Frequenz der periodischen Ausgangsspannung.

3. AC-AC-Matrixwandler nach dem vorherigen Anspruch, der Bestimmungsmittel zum periodischen Bestimmen, mit der Abtastfrequenz, der niedrigsten Spannungssumme unter den N! Spannungssummen umfasst.

4. AC-AC-Matrixwandler nach einem der Anspruche 2 und 3, **dadurch gekennzeichnet, dass** der Wandler eine erste Baugruppe (101) zum Filtern der mehrphasigen Eingangsspannung, die Matrix (102) von Schaltern, eine zweite Baugruppe (103) zum Filtern der mehrphasigen Ausgangsspannung, einen elektronischen Regelkreis (104) und die Befehls- und Steuerelektronik (110) aufweist, wobei die Befehls- und Steuerelektronik den elektronischen Regelkreis steuert und der elektronische Regelkreis die Schaltungen der Schaltermatrix steuert.

5. AC-AC-Matrixwandler nach Anspruch 4, wobei der elektronische Regelkreis zum Befehlen der Umschaltungen der Schaltermatrix durch Befehlen des Öffnens und Schließens jedes in der Schalterkonfiguration als geschlossen definierten Schalters entsprechend der niedrigsten Spannungssumme mit einer Zerhackungsfrequenz und einem Tastverhältnis, definiert durch den Regelkreis auf der Basis der Messungen der Ausgangsphasenströme, und durch Offenhalten jedes in der Schalterkonfiguration als offen definierten Schalters entsprechend der niedrigsten Spannungssumme konfiguriert ist.

6. AC-AC-Matrixwandler nach einem der vorherigen Ansprüche, **dadurch gekennzeichnet, dass** die Zahl N gleich 3 ist, die Ein- und Ausgangsspannungen dreiphasig sind, die Schaltermatrix 9 Schalter aufweist und die Anzahl der Schalterkonfigurationen gleich 6 ist.

7. AC-AC-Matrixwandler nach einem der Ansprüche 1 bis 5, **dadurch gekennzeichnet, dass** die Zahl N gleich 4 ist, die Ein- und Ausgangsspannungen vierphasig sind, die Schaltermatrix 16 Schalter aufweist und die Anzahl der Schalterkonfigurationen gleich 24 ist.

8. AC-AC-Matrixwandler nach einem der vorherigen Ansprüche, **dadurch gekennzeichnet, dass** die Frequenzen der periodischen Eingangsspannung und der periodischen Ausgangsspannung zwischen 0,1 Hz und 1000 Hz liegen.

9. AC-AC-Matrixwandler nach einem der vorherigen Ansprüche, **dadurch gekennzeichnet, dass** die von dem Wandler übertragenen Leistungen zwischen 1 kW und 1000 kW liegen.

10. AC-AC-Matrixwandler nach einem der vorherigen Ansprüche, **dadurch gekennzeichnet, dass** der Wandler bidirektional ist, d.h. dass die mehrphasige periodische Eingangsspannung von einer Spannungsquelle stammt und die mehrphasige periodische Ausgangsspannung eine Last versorgt oder umgekehrt.

**Claims**

1. An AC-AC matrix converter (100) that converts an input multiphase periodic voltage (200) with N input voltages into an output multiphase periodic voltage (300) with N output voltages, said converter having a square matrix (102) with $N^2$ switches, **characterised in that** the converter has command and control electronics (110) that periodically perform at least the two following functions:

   - storing N! voltage summations, each voltage summation corresponding to one switch configuration, each switch configuration relating N times one and only one input voltage and one and only one reference voltage, a reference voltage corresponding to an expected output voltage, each voltage summation being the summation of the N differences in absolute value between one and only one input voltage and one and only one reference voltage
   - switching the matrix array of switches to apply the switch configuration corresponding to the lowest voltage summation.

2. The AC-AC matrix converter according to claim 1, **characterised in that** the converter has a sample-and-hold module (140) that periodically stores, at the sampling frequency, the N! voltage summations, said sampling frequency being an order of magnitude higher than the frequency of the input periodic voltage and an order of magnitude higher than the frequency of the output periodic voltage.

3. The AC-AC matrix converter according to the preceding claim, comprising determining means that periodically determine, at the sampling frequency, the lowest voltage summation among the N! voltage summations.

4. The AC-AC matrix converter according to either one of claims 2 and 3, **characterised in that** the converter has a first assembly (101) for filtering the input multiphase voltage, the matrix (102) of switches, a second assembly (103) for filtering the output multiphase voltage, an electronic control loop (104) and the command and control electronics (110), the command and control electronics controlling the electronic control loop and the electronic control loop controlling the switching of the matrix of switches.

5. The AC-AC matrix converter according to claim 4, wherein the electronic control loop is configured to command the switching of the matrix of switches by commanding to open and to close each switch defined as being closed in said switch configuration corresponding to the lowest voltage summation, at a chopping frequency and with a duty cycle that are defined by the control loop on the basis of the measurements of the output phase currents, and by keeping open each switch defined as being open in said switch configuration corresponding to the lowest voltage summation.

6. The AC-AC matrix converter according to one of the preceding claims, **characterised in that** the number N being equal to 3, the input and output voltages are three-phase, the matrix of switches having 9 switches and the number of switch configurations being equal to 6.

7.  The AC-AC matrix converter according to one of claims 1 to 5, **characterised in that** the number N being equal to 4, the input and output voltages are four-phase, the matrix of switches having 16 switches and the number of switch configurations being equal to 24.

8.  The AC-AC matrix converter according to one of the preceding claims, **characterised in that** the frequencies of the input periodic voltage and of the output periodic voltage are comprised between 0.1 Hz and 1000 Hz.

9.  The AC-AC matrix converter according to one of the preceding claims, **characterised in that** the powers transmitted by said converter are comprised between 1 kW and 1000 kW.

10. The AC-AC matrix converter according to one of the preceding claims, **characterised in that** the converter is bidirectional, i.e. the input multiphase periodic voltage originates from a voltage source and the output multiphase periodic voltage powers a load or vice versa.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020079706 A

**Littérature non-brevet citée dans la description**

- **S. YUSOFF et al.** Prédictive control of a direct AC/AC matrix converter for power supply applications. *6TH IET INTERNATIONAL CONFERENCE ON POWER ELECTRONICS, MACHINES AND DRIVES (PEMD 2012),* 01 Janvier 2012, A92-A92

- **JOSE RODRIGUEZ et al.** A Review of Control and Modulation Methods for Matrix Converters. *IEEE TRANSACTIONS ON INDUSTRIAL ELECTRONICS,* 01 Janvier 2012, vol. 59 (1), 58-70